# EUROPEAN PATENT APPLICATION

(11) **EP 3 467 389 A1**
(43) Date of publication of application: **10.04.2019**
(21) Application number: 17194581.9
(22) Date of filing: 03.10.2017
(51) Int. Cl.: F24D 19/10, G01L 13/06

(54) **A VALVE FOR CONTROLLING FLUID FLOW, A FLUID DISTRIBUTION SYSTEM AND A METHOD FOR MEASURING DIFFERENTIAL PRESSURE**

(71) Applicant: IMI Hydronic Engineering International SA, 1262 Eysins (CH)
(72) Inventor: Jilderos, Daniel, 507 34 Brämhult (SE)
(74) Representative: AWA Sweden AB

(57) **Abstract**

The present inventive concept relates to a valve for controlling fluid flow. The valve comprises a valve body, a chamber arranged inside of the valve body, a fluid inlet for providing fluid to the chamber, and a fluid outlet for receiving fluid from the chamber. The valve further comprises a closing arrangement for controlling the flow of fluid from the fluid inlet to the fluid outlet via the chamber, and a differential pressure sensor for measuring the differential pressure over the closing arrangement, between an upstream pressure and a downstream pressure. The differential pressure sensor is integrated in the valve body, and is arranged to measure the differential pressure for at least an open state of the closing arrangement.

## Description

### Technical field of the Invention

The present inventive concept relates to a valve for controlling fluid flow, the valve comprising a differential pressure sensor for measuring the differential pressure over the valve. The inventive concept further relates to a fluid distribution system comprising such a valve. The inventive concept also relates to a method for measuring the differential pressure over a closing arrangement of a valve.

### Background of the Invention

Fluid distribution systems, for e.g. heating, cooling and water supply are designed to feed a fluid from a source to a consumption point. Each consumption point typically has a calculated and designed flow or differential pressure requirement. However, depending on the type of hydronic system, the flow requirement is often variable over time and can change with factors like seasonality (e.g. summer or winter), that changes the load from the consumption points, temperature changes of the system fluid, changes in consumption of the system fluid (e.g. for drinking water).

Control valves and balancing valves are frequently used in fluid distribution systems and have a variable opening such that the flow rates can be controlled. Hereby, the flow fed to the consumption point may be varied in an effective manner.

A valve typically controls the flow by a closing arrangement, the closing arrangement comprising a closing member, such as e.g. a valve plug, and a closing member receiving portion, such as e.g. a seat arranged to receive the closing member. According to another example, the valve may be a ball valve in which the closing member is shaped as a ball which is arranged to rotate and shift its position relative the closing member receiving portion, and thereby change the opening degree of the closing arrangement.

A fluid flowing through the valve, and the closing arrangement, will be subject to a pressure drop. Thus, fluid upstream of the closing arrangement will be at an upstream pressure, and fluid downstream of the closing arrangement will be at a downstream pressure. Such pressure drop is typically of interest for controlling the energy consumption of the fluid distribution system in which the valve is arranged. Thus, the valve may be equipped with measuring nipples or measuring ports (or measuring points), providing fluid paths to fluid at an upstream pressure and downstream pressure respectively, and thereby enabling measurement of the pressure drop using a differential pressure sensor.

However, measurement of the differential pressure may be cumbersome due to different reasons.

Thus, there is a need in the industry to improve the differential pressure measurement of a valve, and/or to improve the connection between the differential pressure sensor and the fluid which is to be measured.

### Summary of the Invention

An object of the present inventive concept is to provide a valve for which measurement of the differential pressure is improved, and which at least partly alleviates the above mentioned drawbacks of existing valves. This and other objects, which will become apparent in the following, are accomplished by a valve as defined in the accompanying claims.

The present inventive concept is based on the insight that a differential pressure sensor can be integrated into the valve body, thus enabling an improved, or easier, measurement of the differential pressure over the valve. Stated differently, by providing a valve body integrated differential pressure sensor, a simple but yet effective way of measuring the differential pressure over the valve is provided.

According to a first aspect of the present inventive concept, there is provided a valve for controlling fluid flow. The valve comprises:
a valve body, a chamber arranged inside of said valve body, a fluid inlet for providing fluid to said chamber, and a fluid outlet for receiving fluid from said chamber, wherein fluid upstream of said chamber but downstream of said fluid inlet has an upstream pressure, and fluid downstream of said chamber but upstream of said fluid outlet has a downstream pressure,
a closing arrangement for controlling the flow of fluid from said fluid inlet to said fluid outlet via said chamber, said closing arrangement having, at least one open state in which fluid is allowed to flow through said chamber,
a differential pressure sensor for measuring the differential pressure over said closing arrangement, between said upstream pressure and said downstream pressure,
wherein said differential pressure sensor is integrated into said valve body, and wherein said valve comprises a first fluid path enabling a pressurized communication between the differential pressure sensor and fluid at said upstream pressure, and a second fluid path enabling a pressurized communication between the differential pressure sensor and fluid at said downstream pressure, wherein said differential pressure sensor is arranged to measure the differential pressure for at least said open state of said closing arrangement.

By having the differential pressure sensor comprised or integrated in the valve body, there is no need to provide conventional measuring nipples fluidly connected to the upstream and downstream pressure, respectively. Hence, the differential pressure over said valve can be measured without using the conventional measuring nipples. In fact, when manufacturing a valve of the inventive concept, the conventional measuring nipples can be omitted, and less material may be used compared to a corresponding valve having such conventional measuring nipples. Furthermore, the valve may be made less bulky, and the risk of leakage of fluid when providing fluid to the differential pressure sensor can be reduced, as the differential pressure sensor is integrated into the valve body. Moreover, and according to at least one example embodiment, as the differential pressure sensor is comprised or integrated in the valve body, such as e.g. in a cavity of the valve body, the physical distance between main fluid flow of said valve and the differential pressure sensor can be reduced, or kept at a minimum, as the first and second fluid paths for example can be, or comprise, a respective aperture in the valve body surrounding the cavity, wherein the respective aperture may directly face portions of the valve guiding said main fluid flow. It should be understood that the main fluid flow is here referring to the fluid flowing from the fluid inlet to the chamber and further to the fluid outlet, without flowing through any by-pass or via a measuring nipple. However, and according to at least one example embodiment, the differential pressure sensor can be comprised or integrated in the valve body positioned further away from the main fluid flow, such as e.g. in a cavity of the valve body, e.g. in a wall, or between two walls or wall portions, arranged close to, but e.g. outside of, a valve rod of the closing arrangement.

It should be noted that not all of the differential pressure sensor needs to be integrated into the valve body of the valve, but that a portion of the differential pressure sensor may be extending outside of the valve body and the valve. Hence, and according to at least one example embodiment, the differential pressure sensor comprises a valve protruding portion extending outside of said valve body and outside of said valve.

According to at least one example embodiment, the first fluid path may be a first internal fluid path or a first fluid channel inside of said valve body, and/or the second fluid path may be a second internal fluid path or second fluid channel inside of said valve body.

According to at least one example embodiment, the first fluid path is arranged as a first fluid channel inside of said valve body, said first fluid channel having an upstream channel portion for receiving fluid at said upstream pressure, and a sensor channel portion for providing fluid at said differential pressure sensor (thus enabling measurement of the static pressure of said fluid in said sensor channel portion). Correspondingly, and according to at least one example embodiment, the second fluid path is arranged as a second fluid channel inside of said valve body, said second fluid channel having a downstream channel portion for receiving fluid at said downstream pressure, and a sensor channel portion for providing fluid at said differential pressure sensor (thus enabling measurement of the static pressure of said fluid in said sensor channel portion).

According to at least one example embodiment, the valve body is the valve housing, which houses the fluid inlet, the fluid outlet and the closing arrangement. Stated differently, the valve body is a general term relating to the parts and portions housing and holding various components of the valve. Thus the valve body may comprise one or more parts and sections. That is, the valve body, or the valve housing, comprises the solid material, such as e.g. the walls of the valve, which comprises or houses the different components, parts and portions of the valve, such as e.g. the fluid inlet, the fluid outlet, the chamber, the closing arrangement, and possibly any valve rod comprised in, or connected to, the closing arrangement. As will be discussed later, but which is briefly mentioned here, the valve body may comprise, or be comprised of, at least a first valve body part and at least a second valve body part. However, the valve body, or the at least the first and the second valve body parts, is here to be understood as being defined by the walls housing at least the fluid inlet, the fluid outlet and the closing arrangement.

According to at least one example embodiment, said valve body comprises a wall arranged in said valve body, said wall having a cavity holding said differential pressure sensor, a first aperture providing a pressurized communication between the differential pressure sensor and fluid at said upstream pressure, and a second aperture providing a pressurized communication between the differential pressure sensor and fluid at said downstream pressure.

The first aperture may thus be comprised in, or be comprised of, said first fluid path, and the second aperture may be comprised in, or be comprised of, said second fluid path.

According to at least one example embodiment, the wall having a cavity in which said differential pressure sensor is held, may be referred to as a differential pressure wall, or a dp wall.

When stating that the valve comprises a wall arranged, or integrated, in said valve body, having a cavity holding said differential pressure sensor, it should be understood that the differential pressure sensor may be described as being arranged, or integrated, in the valve body of said valve. According to at least one example embodiment, the cavity holding said differential pressure sensor is preferably sized and dimensioned to snuggly receive said differential pressure sensor.

According to at least one example embodiment, the differential pressure sensor is integrated in a cavity arranged between at least two walls, or wall portions, of said valve body.

It should be understood that the chamber arranged inside of said valve body, need not to be a separated or a distinct portion within said valve body, but it may be defined as a space between the fluid inlet and the fluid outlet in which the closing arrangement moves, or is arranged to be moved, in order to control fluid flow from the fluid inlet to the fluid outlet. Hence, the chamber may be referred to as a space, or a portion, of a fluid channel from said fluid inlet to said fluid outlet in which the closing arrangement controls the fluid flow. For example, if the closing arrangement comprises a plug, and the valve body comprises a seat arranged to sealingly receive said plug in a closed state of said closing arrangement, the chamber may be defined as the space between the seat and the plug in the fully open state of the closing arrangement.

Stated differently, the closing arrangement may be understood as having, or being comprised of, a closing member which is a movable part within the valve body, and is a movable part within the chamber. The valve closing member thus controls the flow from the fluid inlet of the valve body to the fluid outlet of the valve body. In an open position of the valve closing member, the valve and the closing arrangement are in their respective open state, and fluid can pass from the fluid inlet, along or via the valve closing member in the chamber, to the fluid outlet of the valve body. Correspondingly, in the closed position of the valve closing member, fluid is prevented from passing from the fluid inlet, along the valve closing member and the chamber, to the fluid outlet of the valve body. The valve closing member may, for instance, be embodied as a plug or a cone or a ball (in a ball valve) which can mate with a seat for obtaining the closed position of the valve closing member. The valve closing member may be connected to a valve rod, which together form the closing arrangement. Moreover, the valve rod may be connected to an actuator which is arranged to operate (i.e. to induce movement of) the valve rod and the valve closing member.

According to at least one example embodiment, the majority, such as for example more than 70 %, or more than 80 % or more than 90 %, of the pressure difference between fluid at said upstream pressure and fluid at said downstream pressure corresponds to a fluid pressure drop in said chamber.

It should be understood that the term "pressurized communication" between two separate portions within the valve should be interpreted as fluid at these two separate portions are at the same, or substantially the same pressure. Naturally, any time a fluid passes through an aperture, flows along a wall, or over a flange of some kind, the fluid is subject to a certain pressure drop. However, as long as such certain pressure drop is neglectable compared to the pressure drop over the closing arrangement, fluid at a first portion separated by such aperture, wall or flange, to fluid at a second portion will still be considered to be in a pressurized communication with each other. According to at least one example embodiment, fluid in pressurized communication with each other are also in fluid communication with each other. However, according to an alternative embodiment, fluid in pressurized communication with each other are separated by a fluid tight membrane, allowing pressure, but not fluid, to be transferred through.

According to one example embodiment, said differential pressure sensor is arranged to measure the differential pressure between a first point positioned between said fluid inlet and said chamber, and a second point positioned between said chamber and said fluid outlet.

Thus, the differential pressure can be measured directly on the fluid in the fluid channel, upstream and downstream of said chamber, respectively. Thus, the differential pressure sensor is preferably integrated in the valve body (e.g. by being held in the cavity within a wall) arranged somewhere between said first point and said second point. Moreover, the first fluid path or first aperture is preferably in a fluid communication with said first point and the second fluid path or second aperture is preferably in a fluid communication with said second point. For example, the first point may be physically positioned in the fluid channel between the fluid inlet and the chamber, and the second point may be physically positioned in the fluid channel between the chamber and the fluid outlet. Hence, the differential pressure sensor (and e.g. the wall with the cavity holding said differential pressure sensor) may be physically positioned between fluid inlet and the fluid outlet.

Thus, according to one example embodiment, said wall is arranged between said fluid inlet and said fluid outlet, and said first aperture comprised in said first fluid path, and is in pressurized communication with said fluid inlet, and said second aperture comprised in said second fluid path, and is in pressurized communication with said fluid outlet.

Hereby, the differential pressure sensor is physically close, or very close, to the fluid which is subject for a differential pressure measurement.

According to one example embodiment, said wall together with said closing arrangement in its closed state, fluidly separates said fluid inlet from said fluid outlet.

Hereby, a wall which is needed in the valve for separating the fluid inlet from the fluid outlet, is also used to hold the differential pressure sensor. Thus, such holder for the differential pressure sensor implies using less material, or no, or very little additional material for providing the differential pressure measurement possibility.

It should be noted that when stating that the wall together with said closing arrangement in its closed state, fluidly separates said fluid inlet from said fluid outlet, no fluid, or only a leakage flow, is allowed to flow via said chamber, but a fluid by-pass could still provide for a small fluid flow from said fluid inlet to said fluid outlet.

According to one example embodiment said wall is a partition wall separating fluid at said upstream pressure from fluid at said downstream pressure.

For example, the wall which together with said closing arrangement in its closed state, fluidly separates said fluid inlet from said fluid outlet, may be described as a partition wall. However, a partition wall may be arranged elsewhere in the valve body, where it separates fluid at the upstream and downstream pressure.

By having the differential pressure sensor held in a cavity of said partition wall, the differential pressure sensor can be placed physically close to both fluid at said upstream pressure and fluid at said downstream pressure.

According to one example embodiment said valve body comprises a first valve body part and a second valve body part sealingly connected to said first valve body part, wherein said second valve body part at least partly houses said closing arrangement.

Thus, the second valve body part may be referred to as a closing arrangement body part, i.e. a valve body part being associated, or arranged to house or hold, the closing arrangement. Correspondingly, the first valve body part may be referred to as a fluid channel body part as the first valve body part according to this embodiment mainly houses the fluid inlet, the fluid outlet and the fluid channel extending there between.

Thus, the valve body integrated differential pressure sensor, or the wall having a cavity holding said differential pressure sensor, may be arranged in either one of the first valve body part and the second valve body part. This means that the differential pressure sensor may be integrated in the valve body arranged distant from the fluid channel between the fluid inlet and the fluid outlet, such as e.g. on a side of the closing arrangement being opposite to the chamber and/or the fluid channel.

It should be noted that the second valve body part may be described as being sealingly received in said first valve body part. In other words, said first valve body part may comprise a receiving opening for said second valve body part. In the example given above in which the second valve body part is a closing arrangement body part, the complete closing arrangement with associated second valve body part may be inserted into receiving opening of the first valve body part.

According to one example embodiment the second valve body part comprises said first fluid path (which e.g. may be a first internal fluid channel) in pressurized communication with fluid at said upstream pressure and in pressurized communication with said differential pressure sensor, and comprises said second fluid path (which e.g. may be a second internal fluid channel) in pressurized communication with fluid at said downstream pressure and in pressurized communication with said differential pressure sensor, in order for said differential pressure sensor to measure the differential pressure between fluid in said first fluid path and fluid in said second fluid path.

Hence, the wall having a cavity holding said differential pressure sensor may be arranged in part or portion of the valve being associated with the closing arrangement, such as e.g. outside of a valve rod connected to said closing arrangement.

According to at least one example embodiment, the differential pressure sensor is held in a cavity arranged in said second valve body part, between two walls, or wall portions.

According to one example embodiment, said differential pressure sensor comprises a first side facing said first fluid path (e.g. facing said first aperture of said cavity), and a second side facing said second fluid path (e.g. facing said second aperture of said cavity), wherein the differential pressure sensor is arranged and configured to measure the pressure difference between a fluid acting on said first side, and a fluid acting on said second side.

Thus, the first side of said differential pressure is arranged to measure a first pressure, and the second side of said differential pressure is arranged to measure a second pressure. Hereby, the differential pressure between the first and second sides can be measured.

It should be understood that the first side of the differential pressure sensor is sealed from said second side of the differential pressure. For example, this is achieved by a sealing at least via the cavity and the therein held differential pressure sensor, so no fluid is allowed to flow from said first aperture to said second aperture via said cavity of the wall. The sealing functionality may e.g. be embodied as a seal arranged along a longitudinal axis of the cavity, between an inner surface of the cavity and an outer surface of said differential pressure sensor.

According to one example embodiment, said cavity of said wall holding the differential pressure sensor has an opening in said valve body, said opening facing an outside of said valve enabling removal of said differential pressure sensor from said cavity.

Hereby, the differential pressure sensor may be removed and replaced if necessary, e.g. if the differential pressure sensor is broken or need to be externally adjusted.

Preferably, the first and second apertures are sealed from said opening, at least via the cavity and the therein held differential pressure sensor, so no fluid is allowed to flow from said first aperture and/or said second aperture, to said opening. The sealing functionality may e.g. be embodied as a seal arranged along the circumference of the cavity, between an inner surface of the cavity and an outer surface of said differential pressure sensor.

According to one example embodiment, said fluid inlet and said fluid outlet are co-axial.

In other words, said fluid inlet and said fluid outlet are arranged on a common axis. For example, a centre of a cross section of said fluid inlet is arranged on the same axis as a centre of a cross section of said fluid outlet. According to one example embodiment, a cross section of said fluid inlet is parallel to a cross section of said fluid outlet.

According to one example embodiment, the fluid channel, such as the main fluid channel of the valve, extends from said fluid inlet to said fluid outlet, at least partly along said common axis.

According to one example embodiment, said wall having a cavity holding said differential pressure sensor is arranged along said common axis, or at least crosses said common axis (note that said common axis of said fluid inlet and said fluid outlet needs not to, but may as well, extend through the respective centre of said fluid inlet and fluid outlet, respectively).

According to one example embodiment, said wall having a cavity holding said differential pressure sensor is arranged to extend into said fluid channel. Hence, said wall may at least partly interrupt, or it may guide, or redirect, the fluid flowing from said fluid inlet to said fluid outlet.

According to one example embodiment, said wall having a cavity holding said differential pressure sensor extends from a peripheral portion, such a peripheral tube portion, of said valve body, into said valve and towards said closing arrangement.

According to one example embodiment, said closing arrangement has a closed state in which no fluid, or only a leakage flow, is allowed to flow through said chamber, and wherein said differential pressure sensor is configured for measuring the differential pressure over said closing arrangement at said closed state.

Hereby, the differential pressure sensor may measure the differential pressure between fluid at said upstream pressure and fluid at said downstream pressure at the closed state, and said at least one open state.

It should be noted that the closing arrangement may be arranged in more states than the closed state and the at least one open state, such as e.g. be arranged in more than one open state. According to at least one example embodiment, the closing arrangement may be arranged in at least two different open states. At least one of the open states may be a fully open state, at which the valve, and the closing arrangement, provides for a fluid flow through the valve at a maximum capacity of the valve. It should be understood that the differential pressure sensor may, according to at least one example embodiment, measure a pressure difference between fluid at said upstream pressure and fluid at said downstream pressure for all states of the valve. For example, for the fully open state of the closing arrangement, a pressure drop is present over the closing arrangement and hence fluid upstream of said chamber but downstream of said fluid inlet will be at said upstream pressure, and fluid downstream of said chamber but upstream of said fluid outlet will be at said downstream pressure. According to one example embodiment, the differential pressure sensor is arranged and configured for measuring the differential pressure between fluid at said upstream pressure and fluid at said downstream pressure, at said fully open state of the closing arrangement.

According to one example embodiment, the pressure difference between fluid at said upstream pressure and fluid at said downstream pressure mainly corresponds to a fluid pressure drop over said closing arrangement.

In other words, the differential pressure sensor is arranged and configured for measuring the fluid pressure drop over said closing arrangement, by measuring the fluid upstream and downstream of said closing arrangement, wherein said upstream and downstream pressures are, at least to a majority, a result of said pressure drop over the closing arrangement.

According to one example embodiment, the valve is a balancing valve or a control valve or a differential pressure control valve. According to one example embodiment, said valve is a combined balancing and control valve.

According to one example embodiment, said valve is not a safety valve for achieving a by-pass flow of the closing arrangement, or a by-pass flow over the differential pressure sensor.

According to one example embodiment, the closing arrangement comprises a valve rod arranged at least partly inside said chamber, and a valve plug arranged to be moved inside said chamber, said valve plug being connected to an end portion of said valve rod, said valve rod and said valve plug being configured to control fluid flow from said fluid inlet to said fluid outlet via said chamber. It should be noted that the valve rod may be at least partly arranged outside of the chamber, such as in the valve body, for example in the second valve body part, and that the valve rod may extend from outside of the chamber to inside of the chamber by extending through a wall of said valve body, or second valve body part.

According to one example embodiment, said valve comprises a valve seat e.g. comprised as a surface in said valve body. Thus, in the closed state of the closing arrangement, the valve plug is arranged in a closed position wherein said valve plug is in sealing contact with the valve seat in order to allow no fluid, or only a leakage flow, to flow via said chamber. Thus, according to at least one example embodiment, the valve comprises a valve seat adapted to mate with said valve plug. The valve seat may e.g. be comprised in the valve body downstream of the fluid inlet. Furthermore, in one of the open states of the closing arrangement, said valve plug is distant from said valve seat and fluid is allowed to flow through said chamber, and in said fully open state of said closing arrangement, said valve plug is positioned at the, for the valve, largest distance from said valve seat.

It should be noted that when referring to a state of the closing arrangement, such as e.g. the closed state or an open state, the corresponding state may be expressed in terms of the valve as well. Thus, the closed state of the closing arrangement may according to at least one example embodiment correspond to a closed state of the valve, and an open state of the closing arrangement may according to at least one example embodiment correspond to an open state of the valve. Thus, these expressions are used interchangeably throughout the application.

According to one example embodiment, said fluid inlet is directly connected to an upstream pipe in a fluid distribution system in which the valve is arranged, and/or said fluid inlet is directly connected to a downstream pipe in said fluid distribution system. Thus, according to at least one embodiment, the valve body at said fluid inlet provides for an upstream coupling arrangement arranged and configured for coupling to said upstream pipe. According to one example embodiment, the valve body at said fluid outlet provides for a downstream coupling arrangement arranged and configured for coupling to said downstream pipe.

Stated differently, said fluid inlet is arranged for providing/guiding fluid into the valve, and said fluid outlet is arranged for guiding fluid out from said valve. In a fluid distribution system in which the valve is installed, the fluid outlet is preferably fluidly connected to a consumption point, such as e.g. a cooling unit or a heating unit, arranged downstream of the valve in the fluid distribution system. Furthermore, upstream of the valve the fluid inlet is preferably fluidly connected to a fluid source.

According to one example embodiment, said fluid inlet is a main fluid inlet to said valve, and said fluid outlet is a main fluid outlet of said valve.

According to one example embodiment, said fluid inlet is not comprised in a measuring nipple of said valve and/or said fluid outlet is not comprised in a measuring nipple of said valve. According to one example embodiment, said fluid inlet is distant from any measuring nipple comprised in said valve, and/or said fluid outlet is distant from any measuring nipple comprised in said valve. Hence, said fluid inlet may be referred to as a measuring nipple-free inlet, and/or said fluid outlet may be referred to as a measuring nipple-free outlet.

According to at least a second aspect of the present inventive concept, a fluid distribution system is provided. The fluid distribution comprises a valve according to the first aspect of the inventive concept, and
an upstream pipe for delivering fluid to said fluid inlet, said upstream pipe having an end portion connected, such as e.g. directly connected, to said fluid inlet upstream of said closing arrangement of said valve,
a downstream pipe for receiving fluid from said fluid outlet, said downstream pipe having an end portion connected, such as e.g. directly connected, to said fluid outlet downstream of said closing arrangement of said valve.

Effects and features of this second aspect of the present inventive concept are largely analogous to those described above in connection with the first aspect of the inventive concept. Embodiments mentioned in relation to the first aspect of the present inventive concept are largely compatible with the second aspect of the inventive concept, of which some embodiments are explicitly mentioned in the following. In other words, a valve as described with any of the embodiments of the first aspect of the inventive concept is applicable to the fluid distribution system described in relation to the second aspect of the inventive concept.

According to at least one embodiment, the fluid distribution system comprises an upstream coupling arrangement sealingly connecting said valve body at said fluid inlet to said end portion of said upstream pipe, and a downstream coupling arrangement sealingly connecting said valve at said fluid outlet to said end portion of said downstream pipe. The upstream arrangement and/or the downstream arrangement may e.g. comprise a threaded connection, or a clamp.

According to one example embodiment, an interface between a cross section of the end portion of said upstream pipe and the fluid inlet, and an interface between a cross section of the end portion of said downstream pipe and the fluid outlet, may be arranged on a common axis.

According to one example embodiment, the fluid distribution system comprises a consumption point arranged downstream of, and in fluid contact with, said fluid outlet, and a fluid source arranged upstream of, and in fluid contact with said fluid inlet.

According to at least a third aspect of the present inventive concept, a method for measuring the differential pressure over a closing arrangement in a valve having a valve body is provided. The method comprises the steps of:
providing a differential pressure sensor integrated in said valve body, wherein said valve comprises a first fluid path enabling a pressurized communication between the differential pressure sensor and fluid at an upstream pressure of said closing arrangement, and a second fluid path enabling a pressurized communication between the differential pressure sensor and fluid at a downstream pressure of said closing arrangement,
measuring the differential pressure between fluid at said upstream pressure and fluid at said downstream pressure by said differential pressure sensor for at least an open state of said valve.

Effects and features of this third aspect of the present inventive concept are largely analogous to those described above in connection with the first aspect and/or the second aspect of the inventive concept. Embodiments mentioned in relation to the first aspect and/or the second aspect of the present inventive concept are largely compatible with the third aspect of the inventive concept. In other words, a valve, or a fluid distribution system as described with any of the embodiments of the first aspect and/or the second aspect of the inventive concept is applicable in the method described in relation to the third aspect of the inventive concept.

For example, said valve body may comprise a wall having a cavity holding said differential pressure sensor, and having a first aperture providing a pressurized communication between the differential pressure sensor and fluid at an upstream pressure of said valve, and a second aperture providing a pressurized communication between the differential pressure sensor and fluid at a downstream pressure of said valve. Thus, the first aperture may be comprised in, or be comprised of, said first fluid path, and the second aperture may be comprised in, or be comprised of, said second fluid path.

For example, and according to at least one example embodiment, the method further comprises the step of measuring the differential pressure between fluid at said upstream pressure and fluid at said downstream pressure by said differential pressure sensor for at least a closed state of said valve.

### Brief description of the drawings

Fig. 1A is a cross-sectional view of a valve according to at least one example embodiment of the inventive concept.
Fig. 1B is a perspective view of the valve shown in Fig. 1A.
Fig. 2 is a cross-sectional view of a valve according to at least another example embodiment of the inventive concept.
Fig. 3 is a schematic illustration of a fluid distribution system comprising a valve according to at least one example embodiment of the inventive concept.
Fig. 4 is a flow chart of the steps in a method for measuring the differential pressure over a closing arrangement in a valve according to at least one embodiment of the inventive concept.

### Detailed description of the drawings

The above, as well as additional objects, features and advantages of the present inventive concept, will be better understood through the following illustrative and non-limiting detailed description of example embodiments of the present inventive concept, with reference to the appended drawings where the same reference numerals will be used for similar elements. In the following description, the present inventive concept is described with reference to a valve for controlling fluid flow through the valve, to a fluid distribution system comprising such valve, and to a method for measuring the differential pressure over a closing arrangement in a valve.

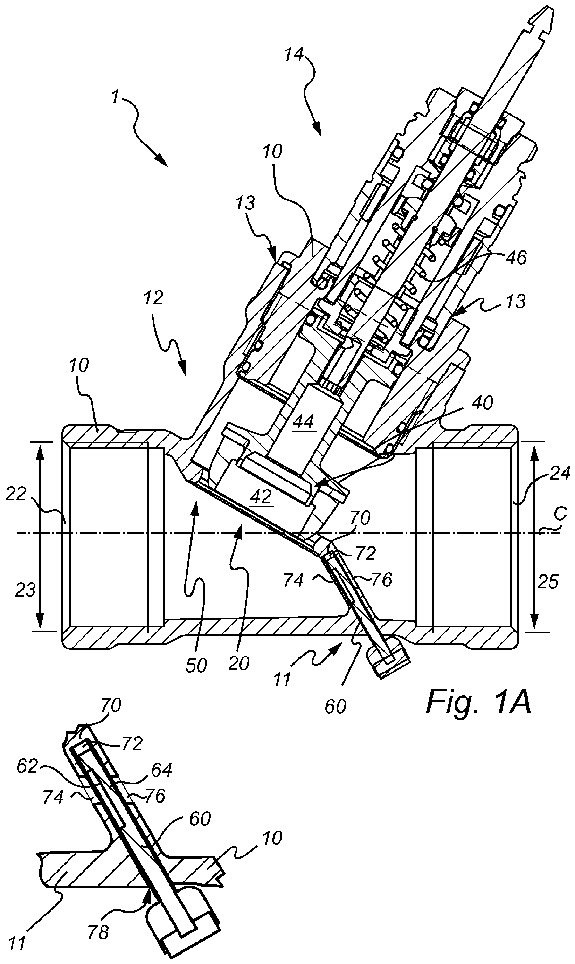

Fig. 1A illustrates a valve 1 for controlling fluid flow. The valve comprises a valve body 10, a chamber 20 arranged inside of the valve body 10, a fluid inlet 22 for providing fluid to the chamber 20, and a fluid outlet 24 for receiving fluid from the chamber 20. Thus, the valve 1 is configured to, in use, and when correctly installed in a fluid distribution system, provide a fluid flow, such as a main fluid flow, from the fluid inlet 22 to the fluid outlet 24 via the chamber 20. The valve 1 further comprises a closing arrangement 40 controlling the flow of fluid from the fluid inlet 22 to the fluid outlet 24 via the chamber 20. In Fig. 1A, the closing arrangement 40 is embodied as a valve plug 42 which is connected to a valve rod 44. Moreover, in Fig. 1A, the valve 1 comprises a valve seat 50 comprised in a surface of the valve body 10. The valve plug 42 is here at least partly arranged in the chamber 20 and may be moved relative the valve seat 50. Stated differently, the valve rod 44 and the valve plug 42 is arranged to be moved inside the chamber 20 in a direction towards the valve seat 50 (e.g. in order to close, or at least reduce the fluid flow over, the closing arrangement 40 or the valve 1) and in a direction away from the valve seat 50 (e.g. in order to open, or at least increase the fluid flow over, the closing arrangement 40 or the valve 1). For example, the valve 1 may be arranged in a closed state in which the valve plug 42 is in sealing contact with the valve seat 50 in order to allow no fluid, or only a leakage flow, to flow via the chamber 20, a first open state in which the valve plug 42 is arranged in a first open position wherein the valve plug 42 is distant from the valve seat 50, and any other second open state in which the valve plug is arranged in a second open position wherein the valve plug 42 is less distant from the valve seat 50 compared to when the valve plug 42 is in its first open position. Thus, the first open state may be a fully open state of the valve 1, and the second open state (i.e. any second open state) may be referring to a position of the valve plug 42 corresponding to an opening degree of the valve 1 between the fully open state and the closed state.

As shown in Fig. 1A, the valve 1 may further comprise a spring 46 arranged in the valve body 10, and being arranged to exert a force to the closing arrangement 40. The spring 46 may be biased towards a normally closed, or a normally open state of the closing arrangement 40.

Fluid between the fluid inlet 22 and the chamber 20, or between the fluid inlet 22 and the closing arrangement 40, is at an upstream pressure, and fluid between the chamber 20 and the fluid outlet 24, or between the closing arrangement 40 and the fluid outlet 24, is at a downstream pressure.

Moreover, the valve 1 in Fig. 1A comprises a differential pressure sensor 60 for measuring the differential pressure over the closing arrangement 40, i.e. between fluid at the upstream pressure and fluid at the downstream pressure. In Fig. 1A, the differential pressure sensor 60 is integrated, or is comprised in, the valve body 10 (shown clearly in the enlargement of Fig. 1 A). Moreover, the valve 1 comprises a first fluid path 74 enabling a pressurized communication between the differential pressure sensor 60 and fluid at the upstream pressure, and a second fluid path 76 enabling a pressurized communication between the differential pressure sensor and fluid at the downstream pressure. More specifically, in Fig. 1A, the valve comprises a wall 70 arranged in the valve body 10. The wall 70 comprises a cavity 72 holding or comprising the differential pressure sensor 60. Moreover, as can be seen in Fig. 1A, the wall 70 comprises a first aperture 74, here being comprised of the first fluid path 74, and a second aperture 76, here being comprised of the second fluid path 76, arranged distant to the first aperture 74.

The closing arrangement 40 in Fig. 1A has at least one open state in which fluid is allowed to flow through the chamber 20. Typically, the closing arrangement 40 also has a closed stated in which the valve plug 42 is in sealing contact with the valve seat 50 in order to allow no fluid, or only a leakage flow, to flow via the chamber 20. It should be understood that when fluid flows from the fluid inlet 22, via the chamber 20 and over, or around the valve plug 42, to the fluid outlet, the fluid is subject to a pressure drop. Thus, fluid upstream of the chamber 20 but downstream of the fluid inlet 22 has an upstream pressure, and fluid downstream of the chamber 20 but upstream of the fluid outlet 24 has a downstream pressure. Hence, in both the open state and in the closed state of the valve 1 (when fluid at the upstream and downstream pressure are trapped, or at least fluidly separated from each other in relation to the chamber 20), there will be a pressure difference between fluid upstream of the chamber 20 and fluid downstream of the chamber 20.

Thus, the differential pressure sensor 60 may measure the differential pressure over the closing arrangement 40, between the upstream pressure and the downstream pressure, for the at least one open state of the valve 1, such as e.g. for the fully open state, but preferably also for the closed state of the valve 1. As illustrated in Fig. 1A, the first aperture 74 of the wall 70 comprising the differential pressure sensor 60, provides for a fluid communication, and here also a pressurized communication, between the differential pressure sensor 60, such as a first side 62 of the differential pressure sensor 60, and fluid at the upstream pressure, here at a first point positioned between the fluid inlet 22 and the chamber 20. Correspondingly, the second aperture 76 of the wall 70 comprising the differential pressure sensor 60, provides for a fluid communication, and here also a pressurized communication, between the differential pressure sensor 60, such as a second side 64 of the differential pressure sensor 60, and fluid at the downstream pressure, here at a second point positioned between the chamber 20 and the fluid outlet 24. Thus, the differential pressure sensor 60 is arranged to measure the differential pressure between the first point positioned between the fluid inlet 22 and the chamber 20 (i.e. fluid acting on the first side 62 of the differential pressure sensor 60) and the second point positioned between the chamber 20 and the fluid outlet 24 (i.e. fluid acting on the second side 64 of the differential pressure sensor 60).

As is also shown in the embodiment of Fig. 1A, the wall 70 comprising the differential pressure sensor 60 is arranged between the fluid inlet 22 and the fluid outlet 24. Thus, the first aperture 74 of the wall 70 is in pressurized communication with the fluid inlet 22, and the second aperture 76 of the wall 70 is in pressurized communication with the fluid outlet 24, regardless of the state of the closing arrangement 40. More specifically, and as shown in Fig. 1A, the wall 70 forms together with the closing arrangement 40 in its closed state, a fluid separation between the fluid inlet 22 and the fluid outlet 24, at least via the chamber 20. Thus, the wall 70 in Fig. 1A may be described as a partition wall 70 as it acts as a partition between fluid at the upstream pressure and fluid at the downstream pressure. Stated differently, the wall 70 in Fig. 1A, extends from a peripheral portion 11 of the valve body 10, such as a peripheral tube portion 11 of the valve body 10, into the valve 1 and extending towards the closing arrangement 40.

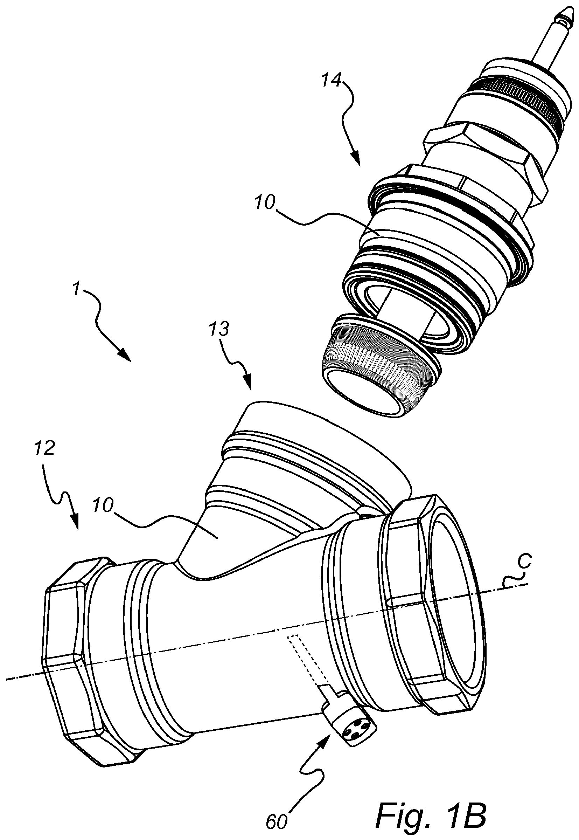

It should be noted that the valve body 10, may according to at least one example embodiment be separated into at least two valve body parts, i.e. a first valve body part 12 and a second valve body part 14. The connection between the first valve body part 12 and the second valve body part 14 is preferably a sealing connection, allowing no fluid to pass between the first valve body part 12 and the second valve body part 14. As shown in Fig. 1A, and even better in Fig. 1B which illustrates the valve 1 of Fig. 1A but in a perspective view, the first valve body part 12 houses at least the fluid inlet 22, the fluid outlet 24, and the majority of the fluid channel there between. The second valve body part 14 is in Fig. 1A and Fig. 1B associated with the closing arrangement 40, and thus houses the closing arrangement 40, and the various components related to the closing arrangement 40. The second valve body part 14 may be described as being received by the first valve body part 12, via a receiving opening 13 in the first valve body part 12. Thus, the closing arrangement 40 may during manufacturing of the valve 1, be connected to the remaining part of the valve 1, by inserting the second valve body part 14 with the closing arrangement 40, into the receiving opening 13 of the first valve body part 12.

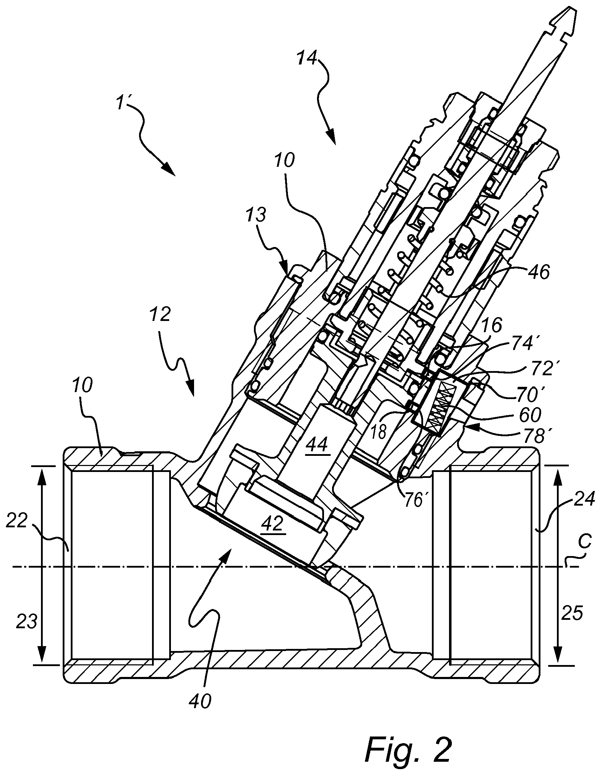

Turning to Fig. 2 showing a valve 1' in accordance with an example embodiment of the inventive concept, very similar to the valve 1 of Fig. 1A, why the same reference numerals will be used for corresponding features. The operation and functional principles of the valve 1' are analogous to the embodiment illustrated in Fig. 1A, and will for the sake of brevity not be further elaborated upon. Focus will now be drawn to the differences between the valve 1' of Fig. 2 and the valve 1 of Fig. 1A.

In Fig. 2, the differential pressure sensor 60 is integrated in the valve body 10, on an opposite side of the closing arrangement 40, as compared to in Fig. 1A. More specifically, in Fig. 2, the differential pressure sensor 60 is held in a cavity 72' positioned in the second valve body part 14, the cavity 72' being surrounded of wall portions 70', or alternatively is comprised in a wall 70'. Thus, in Fig. 2, the differential pressure sensor 60 may e.g. be arranged in its cavity 72' before assembling the second valve body part 14 and its closing arrangement 40. Correspondingly to Fig. 1A, the cavity 72' holding or comprising the differential pressure sensor 60, has a corresponding first aperture 74' and a second aperture 76' arranged distant to the first aperture 74'.

As shown in Fig. 2, the second valve body part 14 comprises a first fluid path 16 in the form of a first internal fluid path 16, or first fluid channel 16 in pressurized communication with fluid at the upstream pressure and in pressurized communication with the first aperture 74' (and hence the differential pressure sensor 60), and a second fluid path 18 in the form of a second internal fluid path 18, or second fluid channel 18 in pressurized communication with fluid at the downstream pressure and in pressurized communication with the second aperture 76' (and hence the differential pressure sensor 60). Hereby, the differential pressure sensor 60 can measure the differential pressure between fluid in the first fluid channel 16, i.e. fluid at the upstream pressure, and fluid in the second fluid channel 18, i.e. fluid at the downstream pressure, even though it is positioned in the second valve body part 14. It should be noted that according to at least some example embodiments, the first fluid path may be referring to the first fluid channel 16 and the first aperture 74', while the second fluid path may be referring to the second fluid channel 18 and the second aperture 76'.

As shown in both the valve 1 of Fig. 1A, and the valve 1' of Fig. 2, the respective cavity 72, 72' of the corresponding wall 70, or wall portions 70' comprises an opening 78, 78' facing an outside of the valve 1,1' enabling removal of the differential pressure sensor 60 from the respective cavity 72, 72'.

The respective opening 78, 78' is preferably sealed from the respective first and second apertures 72, 72', 74, 74', at least when the differential pressure sensor 60 is held or being comprised in the respective cavity 72, 72'. The sealing may e.g. be embodied as a seal arranged along the circumference of the cavity 72, 72'.

As seen in both Fig. 1A and Fig. 2, the fluid inlet 22 and the fluid outlet 24 are arranged co-axial, i.e. along a common axis C. According to at least one example embodiment, a cross section 23 of the fluid inlet 22, and a cross section 25 of the fluid outlet 24, are arranged in parallel. The respective cross section 23, 25 extending perpendicular to the main direction of fluid flow, and/or perpendicular to the common axis C. For example, a centre of the cross section 23 of the fluid inlet 22 may be arranged on the common axis C together with a centre of the cross section 25 of the fluid outlet 24.

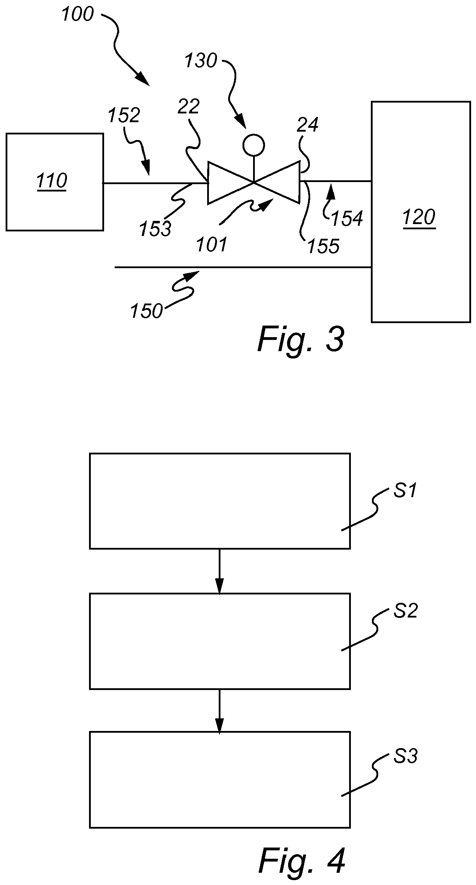

Fig. 3 illustrates a fluid distribution system 100 which could be used e.g. for heating, cooling or water supply. The system 100 is designed to feed a fluid from a source 110 to a consumption point, here illustrated as a cooling unit 120 (but the consumption point could alternatively be comprised of a heater or a consumption water arrangement). Hence, the system 100 in Fig. 3 is configured for cooling e.g. a room in a building with the aid of the cooling unit 120. Furthermore, the system 100 comprises an actuator 130, a valve 101 being controlled by the actuator 130, and piping 150 arranged to guide the fluid and to connect the source 110 with cooling unit 120 via the valve 101, and to transfer the fluid away from the cooling unit 120. The valve 101 may e.g. be identical to the valve 1 of Fig. 1A (or the valve 1' of Fig. 2) why the same reference numerals for the components of the valve 1 in Fig. 1A is used here with Fig. 3 as well.

In Fig. 3. the piping 150 comprises an upstream pipe 152 for delivering fluid to the fluid inlet 22, the upstream pipe 152 having an end portion 153 connected, such as e.g. directly sealingly connected, to the fluid inlet 22 upstream of the closing arrangement 40 of the valve 101. The piping 150 further comprises a downstream pipe 154 for receiving fluid from the fluid outlet 24, the downstream pipe 154 having an end portion 155 sealingly connected, such as e.g. directly connected, to the fluid outlet 24 downstream of the closing arrangement 40 of the valve 101.

Turning to Fig. 4, showing a flow chart of the steps in a method for measuring the differential pressure over a closing arrangement in a valve having a valve body according to at least one embodiment of the inventive concept. The valve referred to in the method may e.g. be identical to the valve 1 of Fig. 1A (or the valve 1' of Fig. 2) why the same reference numerals for the components of the valve 1 in Fig. 1A is used here when describing the method shown in with Fig. 4 as well.

In a first step S1, a differential pressure sensor 60 is integrated in the valve body 10. The valve 1 comprises a first fluid path enabling a pressurized communication between the differential pressure sensor 60 and fluid at an upstream pressure of the closing arrangement 40, and a second fluid path enabling a pressurized communication between the differential pressure sensor 60 and fluid at a downstream pressure of the closing arrangement 40.

In said first step S1, the differential pressure sensor 60 may be provided in a cavity 72 of a wall 70 integrated in the valve body 10. The wall 70 may thus have a first aperture 74 providing a pressurized communication between the differential pressure sensor 60 and fluid at the upstream pressure of the closing arrangement 40, and a second aperture 76 providing a pressurized communication between the differential pressure sensor 60 and fluid at the downstream pressure of the closing arrangement 40.

In a second step S2, the differential pressure between fluid at the upstream pressure and fluid at the downstream pressure is measured by the differential pressure sensor 60 for at least an open state of the valve 1.

Hereby, the differential pressure sensor can measure the differential pressure over the closing arrangement 40, without using conventional measuring nipples. Moreover, the physical distance between main fluid flow of the valve 1 and the differential pressure sensor 60 can be reduced, or kept at a minimum.

In a third step, S3 the differential pressure between fluid at the upstream pressure and fluid at the downstream pressure is measured by the differential pressure sensor 60 for at least a closed state of the valve 1.

It should be understood that the inventive concept is not limited to the described exemplary embodiments; rather the scope being generally defined by the accompanying claims. For example, as mentioned above, the differential pressure sensor may be integrated in various positions within the valve body such as in the first valve body part or in the second valve body part. According to one example embodiment, the differential pressure sensor is held in a cavity within the valve body, the cavity comprising the previously described first and second apertures. For example, in the embodiments in which the differential pressure sensor is integrated, or comprised in a wall of the valve body, the wall and the corresponding cavity may be arranged in various walls, or wall portions of the valve body, e.g. in the first valve body part or the second valve body part. Furthermore, more than one differential pressure may be integrated into the valve body, at different positions relative each other.

Furthermore, any reference signs in the claims should not be construed as limiting the scope, and the word "comprising" does not exclude other elements or steps, and the indefinite articles "a" or "an" does not exclude a plurality.

## Claims

1. A valve for controlling fluid flow, said valve comprising:
a valve body, a chamber arranged inside of said valve body, a fluid inlet for providing fluid to said chamber, and a fluid outlet for receiving fluid from said chamber, wherein fluid upstream of said chamber but downstream of said fluid inlet has an upstream pressure, and fluid downstream of said chamber but upstream of said fluid outlet has a downstream pressure,
a closing arrangement for controlling the flow of fluid from said fluid inlet to said fluid outlet via said chamber, said closing arrangement having, at least one open state in which fluid is allowed to flow through said chamber,
a differential pressure sensor for measuring the differential pressure over said closing arrangement, between said upstream pressure and said downstream pressure,
wherein said differential pressure sensor is integrated into said valve body, and wherein said valve comprises a first fluid path enabling a pressurized communication between the differential pressure sensor and fluid at said upstream pressure, and a second fluid path enabling a pressurized communication between the differential pressure sensor and fluid at said downstream pressure, wherein said differential pressure sensor is arranged to measure the differential pressure for at least said open state of said closing arrangement.

2. A valve according to claim 1, wherein said differential pressure sensor is arranged to measure the differential pressure between a first point positioned between said fluid inlet and said chamber, and a second point positioned between said chamber and said fluid outlet.

3. A valve according to any one of claims 1-2, comprising a wall arranged in said valve body, said wall having a cavity holding said differential pressure sensor, a first aperture providing a pressurized communication between the differential pressure sensor and fluid at said upstream pressure, and a second aperture providing a pressurized communication between the differential pressure sensor and fluid at said downstream pressure.

4. A valve according to claim 3, wherein said wall is arranged between said fluid inlet and said fluid outlet, and wherein said first aperture is comprised in said first fluid path, and is in pressurized communication with said fluid inlet, and said second aperture is comprised in said second fluid path, and is in pressurized communication with said fluid outlet.

5. A valve according to any one of claims 3-4, wherein said wall together with said closing arrangement in its closed state, fluidly separates said fluid inlet from said fluid outlet.

6. A valve according to any one of claims 3-5, wherein said wall is a partition wall separating fluid at said upstream pressure from fluid at said downstream pressure.

7. A valve according to any one of claims 3-6, wherein said cavity of said wall has an opening in said valve body, said opening facing an outside of said valve enabling removal of said differential pressure sensor from said cavity.

8. A valve according to any one of the preceding claims, wherein said valve body comprises a first valve body part and a second valve body part sealingly connected to said first valve body part, wherein said second valve body part at least partly houses said closing arrangement.

9. A valve according to any one of the preceding claims, wherein said differential pressure sensor comprises a first side facing said first fluid path, and a second side facing said second fluid path, wherein the differential pressure sensor is arranged and configured to measure the pressure difference between a fluid acting on said first side, and a fluid acting on said second side.

10. A valve according to any one of the preceding claims, wherein said fluid inlet and said fluid outlet are co-axial.

11. A valve according to any one of the preceding claims, wherein said closing arrangement has a closed state in which no fluid, or only a leakage flow, is allowed to flow through said chamber, and wherein said differential pressure sensor is configured for measuring the differential pressure over said closing arrangement at said closed state.

12. A valve according to any one of the preceding claims, wherein the pressure difference between fluid at said upstream pressure and fluid at said downstream pressure mainly corresponds to a fluid pressure drop over said closing arrangement.

13. A fluid distribution system comprising a valve according to any one of claims 1-12, and
an upstream pipe for delivering fluid to said fluid inlet, said upstream pipe having an end portion connected, such as e.g. directly connected, to said fluid inlet upstream of said closing arrangement of said valve,
a downstream pipe for receiving fluid from said fluid outlet, said downstream pipe having an end portion connected, such as e.g. directly connected, to said fluid outlet downstream of said closing arrangement of said valve.

14. A method for measuring the differential pressure over a closing arrangement in a valve having a valve body, said method comprising the steps of:
providing a differential pressure sensor integrated in said valve body, wherein said valve comprises a first fluid path enabling a pressurized communication between the differential pressure sensor and fluid at an upstream pressure of said closing arrangement, and a second fluid path enabling a pressurized communication between the differential pressure sensor and fluid at a downstream pressure of said closing arrangement,
measuring the differential pressure between fluid at said upstream pressure and fluid at said downstream pressure by said differential pressure sensor for at least an open state of said valve.

15. The method according to claim 14, further comprising the step of measuring the differential pressure between fluid at said upstream pressure and fluid at said downstream pressure by said differential pressure sensor for at least a closed state of said valve.
